Europäisches Patentamt

European Patent Office

Office européen des brevets

(11) Numéro de publication : **0 446 545 A1**

(12) # DEMANDE DE BREVET EUROPEEN

(21) Numéro de dépôt : **90403624.1**

(22) Date de dépôt : **17.12.90**

(51) Int. Cl.⁵ : **G01M 3/28**

(30) Priorité : 18.12.89 FR 8916717

(43) Date de publication de la demande :
18.09.91 Bulletin 91/38

(84) Etats contractants désignés :
DK FR SE

(71) Demandeur : STEIN INDUSTRIE Société
Anonyme dite:
19-21, avenue Morane Saulnier
F-78140 Vélizy Villacoublay (FR)

(72) Inventeur : Marjollet, Jacques
37, Quai de Valmy
F-75010 Paris (FR)

(74) Mandataire : Weinmiller, Jürgen et al
Lennéstrasse 9 Postfach 24
W-8133 Feldafing (DE)

(54) Bouchon d'étanchéité pour épreuve sous pression élevée de tubes de faible diamètre.

(57)    Le bouchon est constitué d'un tube (1) alésé introduisant le fluide sous pression et bloqué dans le tube à tester (2) par des douilles d'étanchéité en polyuréthane (5).

EP 0 446 545 A1

Jouve, 18, rue Saint-Denis, 75001 PARIS

# FIG.2

# BOUCHON D'ETANCHEITE POUR EPREUVE SOUS PRESSION ELEVEE DE TUBES DE FAIBLE DIAMETRE

La présente invention concerne un bouchon d'étanchéité pour épreuve sous pression élevée de tubes de faible diamètre comprenant un tube cylindrique alésé axialement disposé à l'intérieur du tube à tester et servant à introduire le fluide sous pression, l'étanchéité entre ledit tube alésé et le tube à tester étant réalisée au moyen d'une ou plusieurs douilles d'étanchéité comprimées par un fouloir lesdites douilles servant également au blocage du tube alésé à l'intérieur du tube à tester, caractérisé en ce que la ou lesdites douilles d'étanchéité sont en polyuréthane.

De tels bouchons sont utilisés pour introduire la pression hydraulique dans des tubes d'échangeur de chaleur en particulier des tubes de chauffage d'eau.

Un tel bouchon est décrit dans le document US-A-2610551.

Or, les tubes d'échangeur de chaleur doivent fonctionner à des pressions de plus en plus élevées et dès lors il est nécessaire de vérifier leur résistance lors d'épreuve à la pression dans une zone pouvant dépasser 200 bars.

Les bouchons connus comportent des douilles en caoutchouc qui ne résistent pas à des pressions aussi élevées, le tube de test étant éjecté du tube à tester.

La présente invention a pour but de procurer un bouchon d'étanchéité pour épreuve sous pression élevée qui présente une bonne étanchéité et permette d'effectuer en sécurité des épreuves de tubes d'échangeur de chaleur sans risque d'être chassé de son logement par la pression.

Après de nombreux essais sur des divers matériaux thermoplastiques notamment de polytétrafluoréthylène l'inventeur a trouvé que les douilles d'étanchéité en polyuréthane se grippaient dans le tube à tester empêchant le tube à tester, d'être chassé

Le bouchon d'étanchéité selon l'invention est caractérisé en ce qu'il comporte des douilles en polyuréthane.

Selon une réalisation préférentielle de l'invention, on pourra n'utiliser qu'une seule douille en polyuréthane.

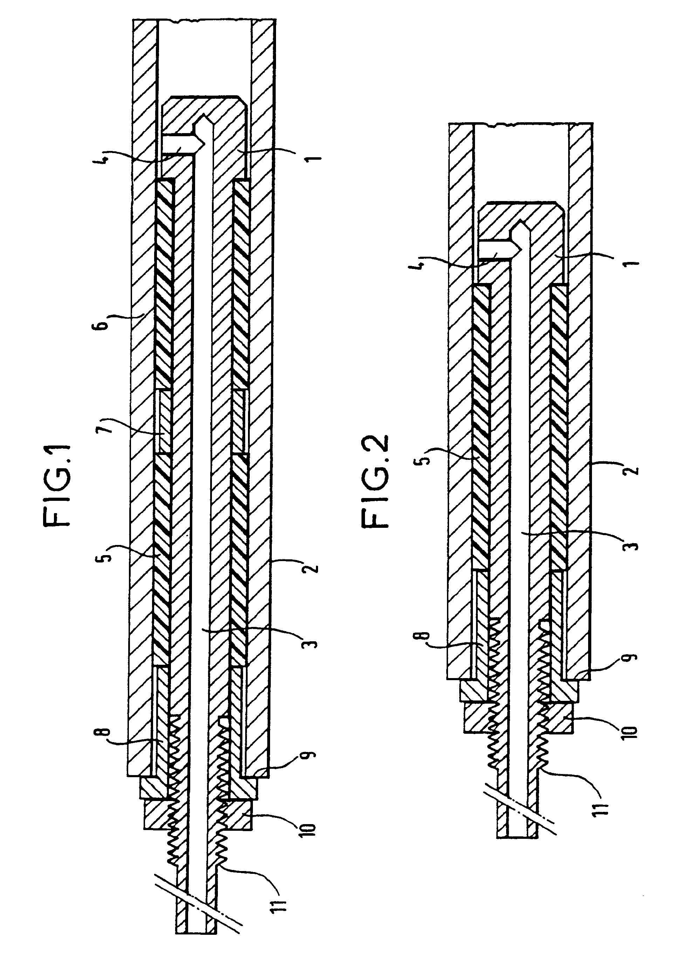

Il est décrit ci-après, à titre d'exemple et en référence aux figures 1 et 2 deux types de bouchon d'épreuve à la pression de tubes d'échangeur de chaleur selon l'invention.

Le bouchon métallique d'introduction de la pression d'échangeur de chaleur 2 est constitué par un tube métallique 1 qui comporte un alésage axial 3, suivi d'un perçage radial 4 débouchant à l'intérieur du tube 2 (voir figure 1).

Le système d'étanchéité se compose de deux douilles cylindriques 5, 6 en polyuréthane, séparées par une douille-entretoise métallique 7. Un fouloir métallique 8, serré par un écrou 10 vissé sur une pièce filetée 11, et assurant la mise en place du bouchon, vient porter par son extrémité interne sur l'extrémité externe de la douille 5 et repose par un épaulement 9 sur la portée externe de tube 2.

On a constaté qu'il était possible à l'aide d'un tel bouchon de soumettre des tubes d'échange de chaleur à une pression d'épreuve supérieure à 200 bars, et pouvant atteindre 350 bars, sans risque de chasse du bouchon hors de son logement.

L'invention s'applique notamment aux tubes d'échangeur de chaleur pour chaudières de vaporisation d'eau et de surchauffe de vapeur.

Dans l'exemple représenté à la figure 2 le bouchon 1 ne comporte qu'une seule douille 5. La propriété grippante du polyuréthane est si importante qu'une douille 5 de 5 mm de hauteur suffit pour bloquer le bouchon dans le tube 2 alors que la pression monte jusqu'à 100 bars.

## Revendications

1. Bouchon d'étanchéité pour épreuve sous pression élevée de tubes de faible diamètre (2) comprenant un tube cylindrique (1) alésé axialement disposé à l'intérieur du tube à tester (2) et servant à introduire le fluide sous pression, l'étanchéité entre ledit tube alésé (1) et le tube à tester (2) étant réalisée au moyen d'une ou plusieurs douilles d'étanchéité (5, 6) comprimées par un fouloir (10), lesdites douilles (5, 6) servant également au blocage du tube alésé (2) à l'intérieur du tube à tester (1), caractérisé en ce que la ou lesdites douilles d'étanchéité (5, 6) sont en polyuréthane.

2. Bouchon d'étanchéité selon la revendication 1, caractérisé en ce que la ou lesdites douilles (5, 6) sont au contact de la paroi externe du tube alésé (1) et de la paroi interne du tube à tester (2).

3. Bouchon d'étanchéité selon la revendication 2, caractérisé en ce qu'il comporte deux douilles séparées (5, 6) par une douille métallique (7) formant entretoise.

4. Bouchon d'étanchéité selon la revendication 2, caractérisé en ce qu'il comporte une seule douille d'étanchéité (5).

FIG.1

FIG.2

Office européen
des brevets

**RAPPORT DE RECHERCHE EUROPEENNE**

Numero de la demande

EP 90 40 3624

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | DE-U-7 621 029 (STÄDLER & BECK O.H.G.) <br> * Page 3, alinéas 2,3; figure * | 1,2,4 | G 01 M 3/28 |
| Y | FR-A-2 618 901 (VALLOUREC INDUSTRIES) <br> * Résumé; page 4, lignes 33-36; figure 1 * | 1,2,4 | |
| Y | US-A-2 610 651 (J. HAHN) <br> * En entier * | 1 | |
| A | | 3 | |
| Y | FR-A-2 327 529 (SUMITOMO KINZOKU KOGYO K.K. et al.) <br> * Page 4, lignes 5-12; figures * | 1 | |
| Y | US-A-4 027 513 (R.B. DE MENT et al.) <br> * Résumé; figures * | 1 | |
| | | | **DOMAINES TECHNIQUES RECHERCHES (Int. Cl.5)** <br><br> G 01 M 3 |

Le présent rapport a été établi pour toutes les revendications

| Lieu de la recherche | Date d'achèvement de la recherche | Examinateur |
|---|---|---|
| LA HAYE | 18-06-1991 | VAN ASSCHE P.O. |